# EUROPEAN PATENT APPLICATION

(11) **EP 3 165 480 A1**
(43) Date of publication of application: **10.05.2017**
(21) Application number: 16189500.8
(22) Date of filing: 22.02.2008
(51) Int. Cl.: B65G 45/22, B65G 45/24, B65G 45/26, B05B 15/04

(54) **DEVICE FOR CLEANING FROM A CONVEYOR BELT, DRIVEN ON ROLLERS, FLUID SUBSTANCES SPRAYED THEREON**

(30) Priority: 27.02.2007 IT BO20070125
(62) Divisional of application: 08151833.4
(71) Applicant: CEFLA SOCIETA' COOPERATIVA, 40026 Imola (BO) (IT)
(72) Inventor: DOVADOLA, Massimo, I-48012 BAGNACAVALLO, Province of Ravenna (IT); FRANZONI, Luigi, I-40026 IMOLA (IT)
(74) Representative: Porsia, Attilio

(57) **Abstract**

In a machine for painting, dyeing or impregnating processes a device for cleaning the lower return section (T') of a conveyor belt (T) driven on rollers (R) from fluid substances sprayed onto it, said device being of the type which comprises at least one reverse roller (C1), rotating in a direction (F) opposed to the sliding direction (F') of the lower section (T') of the belt (T), said roller (C1) being in contact along a tangent line (A) with the lower section (T') of the conveyor belt (T) to be cleaned so as to scrape it; characterized in that at least one first doctor blade (7) for scraping the lower section (T') of the conveyor belt, said doctor blade being arranged to form between the lower section (T') of the conveyor belt (T) and the reverse roller (C1) a space (V); conduit means (1) for introducing a cleaning solvent into the space (V); means (107) for limiting the immediate discharging of the solvent from the space (V) so that the reverse roller (C1) is wetted by the solvent over its entire axial length, and further comprising at least one hopper (2) for collecting the solvent exiting from the sides of the space (V).

## Description

The present Patent Application is a divisional application of the European Patent Application No. 08151833.4.
The invention concerns a device for cleaning externally a conveyor belt soiled with a fluid substance, said belt being endlessly wound and driven around at least two end rollers, at least one of which is motor-driven. In particular the device is intended to clean the conveyor belts of machines and plants for painting, dyeing or impregnating processes, referred to below in short and for the sake of simplicity as "painting machines", which convey the articles to be treated through a chamber for spraying the fluid treatment substance, such as paint for example. The conveyor belt is formed by two sections: an upper outward section, on which the articles to be treated are usually rested, said articles, when they pass through the spraying chamber, being coated with the paint spray, and a lower return section, which is situated outside the said spraying chamber and which, after leaving this chamber, is soiled with paint which must be recovered while the conveying section itself must be cleaned before returning to the upper level in order to receive the new articles to be treated.

The devices currently used to recover the residual paint and clean the belt comprise means for removing the paint from the belt by means of a shaving or scraping operation and comprise cleaning systems which wet the belt with solvent and then dry and clean it, for example using fixed doctor blades or rotating cylinders or a combination of these means.

In European patent EP 425969 in the name of the Applicant, the cleaning device comprises a steel cylinder or roller with a perfectly smooth surface, which acts on the return section of the conveyor with a parallel arrangement for example facing the end drive roller of the said conveyor and this steel roller is made to rotate in the opposite direction to the direction of feeding of the belt to be cleaned, so as to perform effective shaving-off of the residual paint which is detached from this roller by cleaning means and collected in a recovery hopper. The said counter-rotating cleaning roller, also called a reverse roller, is partially immersed with a bottom portion thereof inside a solvent-containing tank so as to be cleaned entirely or partly and convey a film of the said solvent or solvent and paint into the zone of contact with the lower section of the belt to be cleaned, in order to wet the belt zone from which the paint is removed and ensure that the said conveyor section leaves the reverse roller partly with solvent and partly with any paint, this having the function of softening further the residual paint which can thus be easily removed by the following cleaning means comprising a further reverse roller and/or fixed doctor blades and/or rotating brushes and any other suitable means.

This reverse roller cleaning system has, over time, proved to be very valid and advantageous, but has limitations due to the considerable distance of the solvent tank from the belt to be cleaned, so that there is a considerable dispersion in the external environment of solvent vapours from the said tank inside which the reverse roller is immersed at the bottom and from the surface section of the said reverse roller which emerges from said tank with the solvent and which rotates upwards so as to scrape the bottom section, to be cleaned, of the said conveyor of the painting machine.

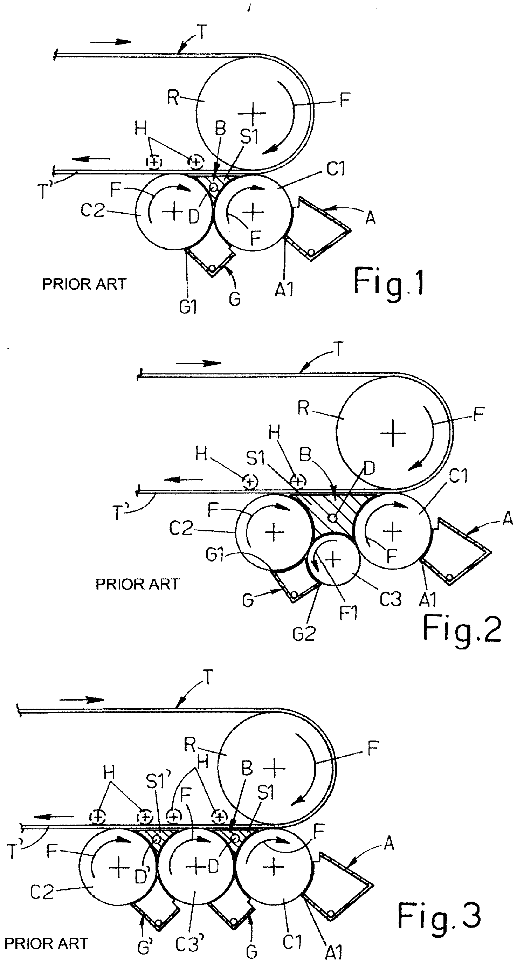

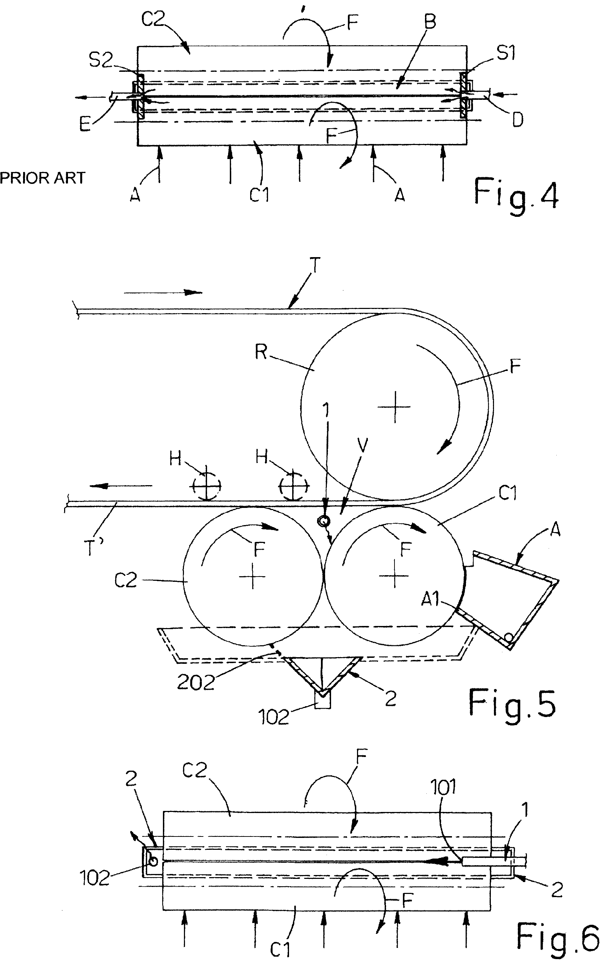

These limitations were overcome with the solution described in European patent EP 1,136,399 and associated patents in the same family, which is briefly summarised here with reference to Figures 1, 2 and 3 which show corresponding different embodiments of this innovative solution and with reference to Figure 4 which shows a top plan view of the further details of the solution according to Figure 1. In Figures 1 and 4, T denotes the conveyor belt of the painting machine and R denotes the end drive roller of this conveyor which rotates in the direction of the arrow F. C1 denotes the reverse roller or cylinder which also rotates in the direction F of the said roller R and which co-operates with the portion of the lower section T' of the conveyor T supported by the said roller R and/or by other following suitable means so that, as a result of the opposite movement in the zone of contact between the belt section T' and roller C1, this reverse roller removes the paint from the belt section T', which is then preferably removed from the same roller C1 by any suitable scraping means, for example by a static scraping surface A1 which is for example associated with a hopper A for collection and removal of this recovered paint. Downstream of the reverse roller C1 a second reverse roller C2 operates in substantial contact therewith, which second roller also rotates in the direction of the arrow F and may be made of steel or lined with materials suitable for cleaning the conveyor T, for example with cloth or fabric, the interference between the rollers C1 and C2 being such that, in the zone of substantial mutual contact, there is no wear of the weaker surface of the two rollers and so that these rollers are able to rotate freely.

The ends of the space B situated above the zone of mutual contact of the rollers C1 and C2 are closed by shoulders S1 and S2 which are made of a suitable plastic and co-operate with the ends of the said rollers C1, C2 and which at the top are situated at a short distance from the lower section T' of the conveyor T so that the said space B is confined from the external environment and forms an actual tank inside which solvent may be continuously introduced, for example via at least one supply pipe D which passes, for example, through the end shoulder S1, while the opposite shoulder S2 is provided with at least one pipe E for discharging the paint recovered by the second reverse roller C2. The solvent tank now formed inside the space B replaces the previous tank inside which the bottom part of the first reverse roller C1 was immersed, with obvious advantages in terms of a smaller dispersion of the solvent vapours in the external environment. Part of the solvent situated inside the tank B wets the ascending surface of the roller C1 and is deposited on the lower section T' of the conveyor T so as to wet the paint removed by this roller and lubricate suitably the surfaces of the parts C1 and T' which make scraping contact with each other. Part of the solvent remains on the lower section T' of the conveyor T and softens the residual paint which is then removed by the second roller C2 which is cleaned during contact with the solvent inside the tank B. G denotes a hopper which collects the small stream of solvent which trickles down from the zone of mutual contact of the rollers C1, C2 and from the end shoulders S1, S2 and which with its edge G1 may if necessary clean the roller C2 and/or limit the quantity of solvent which this rollers conveys upwards for further wetting of the lower section T' of the conveyor T, in order to soften any further residual paint which may then be removed by further cleaning means, such as doctor blades, brushes, cloth pads and/or other suitable means.

The second solution, also known and shown in Figure 2, envisages that the reverse rollers C1 and C2 are spaced from each other and that a third roller C3 operates in contact between them, said third roller rotating in a direction F1 opposite to the direction F of the adjacent rollers and at the same peripheral speed so as to close sealingly the solvent tank B at the bottom, preventing frictional contact between the said rollers. At least one hopper G is provided underneath the last two rollers C2, C3 and with its suitably designed edges G1 and G2 is able to scrape the said rollers C2, C3 so as to clean them. The shoulders S1 and S2 which close the ends of the tank for the solvent supplied by the pipe D and discharged by opposite means are now arranged such that they act on the ends of the set of three rollers C1, C2, C3. The middle roller C3 is also supported by the same side walls of the frame which rotatably supports the ends of the rollers C1, C2 and is also connected to suitable rotational means.

The third solution, which is also known and shown in Figure 3, teaches that the middle roller C3' may be at a height such as to touch also the lower section T' of the conveyor of the painting machine, this roller being able to rotate in the same direction F1 as the roller C3 in the solution according to Figure 2, so as to supply solvent directly onto the section T', or being able to rotate in the same direction F as the other two rollers so as to act with a reverse action on the section T' to be cleaned. It is clear how this solution is substantially a duplicate of the solution according to Figure 1, with pairs of shoulders S1, S2 and S1', S2' between the consecutive rollers and with corresponding recovery hoppers G, G' underneath the said pairs of consecutive rollers. D and D' denote the pipes for supplying the solvent into the tanks formed by the set of three reverse rollers, by the overlying section T' of the conveyor T and by the said pairs of end shoulders S1, S2 and S1', S2'. In the solution according to Figure 3 also, the middle roller C3' is rotatably supported by the frame which carries the rollers C1 and C2 and, in the same way as these rollers, is actuated by suitable rotational means.

The invention intends simplifying the constructional design of a cleaning device such as that of the abovementioned solutions, with a novel device which combines the advantages of the solutions according to Figures 1 and 3, i.e. that of providing solvent tanks with a small depth and set very high up and close to the section T' of the belt to be cleaned, with the advantages of the solution according to Figure 2, i.e. that of dynamic and revolving closure of the successive reverse rollers by a middle roller, without, however, the constructional complexity and shortcomings of this second solution, the former relating to the support and to the drive system of the said middle roller and the latter relating to the large depth of the solvent tank.

The novel solution envisages that there is a small distance between the consecutive reverse rollers, such that the shaving contact between these rollers according to the known solution of Figure 1 does not occur and, when the paint employed uses solvent which evaporates easily, envisages the arrangement, between the said reverse rollers, of a floating parallel roller, also of small diameter, which rests on the consecutive reverse rollers situated at a small distance from each other, so as to be supported by them, and which is made to rotate by them, without the need for supports and a drive system at the ends, as is instead the case in the prior art. If necessary, it is possible to remove this middle roller and gain full access to the reverse rollers for any ordinary and extraordinary maintenance needs. For applications involving paints or other products which use water and other low-volatility liquids as the solvent, the said middle roller may not be necessary since a recovery tank is in any case present underneath the reverse rollers.

Another shortcoming of the known solutions consists in the complexity of the constructional design and mounting of the closing shoulders on the ends of the solvent tank, said mounting on occasions being problematic when the reverse roller is lined with cloth or fabric in order to ensure vigorous and effective cleaning of the belt T'. Since, even with the presence of the said shoulders S1, S2, closing of the ends of the solvent tank can never be performed in perfectly sealed conditions, so that drops of solvent inevitably fall from the ends of the upper tank and since the said solvent tank may be formed with a limited depth, it has been established that the said shoulders may be eliminated and that it is possible to obtain good results as regards operation of the cleaning apparatus by introducing the solvent between the rollers at a suitable distance from at least one or both their ends, so that the solvent also wets the middle parts of these rollers and then flows by means of gravity and as a result of rotation of the said rollers, towards the ends of the latter, passing over their entire axial length.

These and other characteristic features of the invention will appear more clearly from the following description of a preferred embodiment thereof, provided purely by way of a non-limiting example, in the further figures of the accompanying sets of drawings where, in addition to Figures 1 to 4, already considered:
- Fig. 5 shows a side elevation view, with parts cross-sectioned, of the device according to Figure 1, but without the side shoulders for retaining the solvent inside the upper tank, which does not form the object of the present invention;
- Fig. 6 shows a top plan view of the solution according to Figure 5, which does not form the object of the present invention;
- Fig. 7 shows a side elevation view, with parts cross-sectioned, of the cleaning device with a floating roller driven between the two successive reverse rollers, which does not form the object of the present invention;
- Fig. 8 shows a top plan view of the further details of the solution according to Figure 7, which does not form the object of the present invention;
- Fig. 9 shows a perspective view of a constructional variant of the solution according to Figures 7 and 8, which does not form the object of the present invention;
- Fig. 10 shows other details of the variant according to Figure 9 cross-sectioned along the line X-X, which does not form the object of the present invention;
- Fig. 11 shows, laterally and with parts cross-sectioned, a further constructional variant of the cleaning device, equivalent to that of Figure 7, with the upper solvent-tank formed by a reverse roller and by a doctor blade, which does not form the object of the present invention;

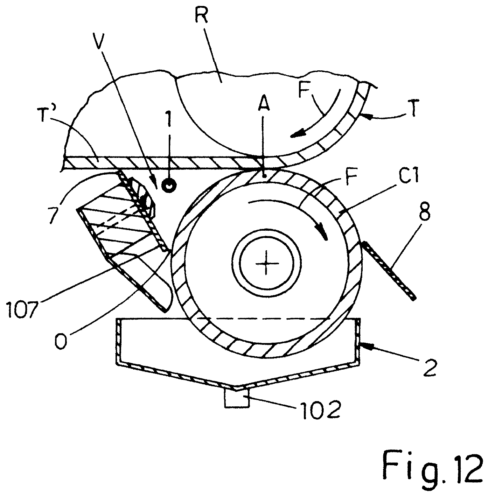

- Fig. 12 shows a constructional variant of the cleaning device according to the present invention. The solution according to Figure 5 corresponds to the known solution according to Figure 1 which make use of two successive reverse rollers C1 and C2 which are placed in contact with the lower section T' of the conveyor belt T to be cleaned and for example are positioned substantially in mutual contact or at a short distance from each other (see below), so as to form between them a tank V inside which solvent is supplied (see below), at least the main reverse roller C1 being cleaned by the scraper means (A1) of a respective hopper A or by any other suitable means known and suitable for the purpose, also means of the dynamic type. H denotes known opposition means consisting, for example, of rollers or runners which are situated upstream and downstream of the roller C2, as shown in Figure 5, or in direct opposition to the said roller C2, so as to keep the lower section T' of the conveyor T co-operating with a suitable degree of pressure with the second reverse roller C2 which is unable to rely on the presence of the drive roller R.

The upper tank V may not have one or both the end shoulders S1 and S2 according to the aforementioned known art and the solvent may be introduced inside this tank via at least one end thereof, for example by at least one pipe 1 (Figs. 5, 6) which terminates with its supplying end 101 at a distance from the side of the set of rollers, sufficient to ensure that, also owing to the pressure of the solvent emitted from the said pipe, the solvent manages to wet a middle part of the tank V and the rollers C1, C2 which define it, so that the solvent itself is caused, by the said force of expulsion from the pipe 101, the rotation of these rollers and the linearity of the generatrices of their surfaces and therefore also the force of gravity, to pass over the entire axial length of the rollers, following which the said solvent flows out from the ends of the tank V and is collected by a hopper 2 and/or by other suitable collection means, such as slides, which form overall a system with a length suitably greater than the axial length of the cleaning rollers, which projects with suitable end sections from the said rollers C1, C2 so as to be able to collect properly all the liquid which falls from these cleaning rollers C1, C2. The hopper 2 may be such as to extend partly also underneath the main roller C1 and to a greater degree underneath the roller C2, as shown in broken lines in Figure 5 and may be structured so as to slope with its bottom wall which will have in at least one lower point at least one discharge mouth or duct 102 which will be situated in the middle and/or at the end and from which the liquid will be discharged so that it can be conveyed away and re-circulated by suitable means (see below).

It is understood that the following constructional variants may fall within the scope of the invention:
a) the solvent may be introduced via both the ends of the tank V by respective pipes of the same type as that indicated by 1;
b) the reverse roller C1 may be without the scraping means A1 and the hopper A since the action of cleaning this roller could be performed by the following roller C2
which could in turn be provided with scraping means 202 for detaching the paint and causing it to fall into the hopper 2 from where it would be removed by the solvent which falls from the upper tank V.

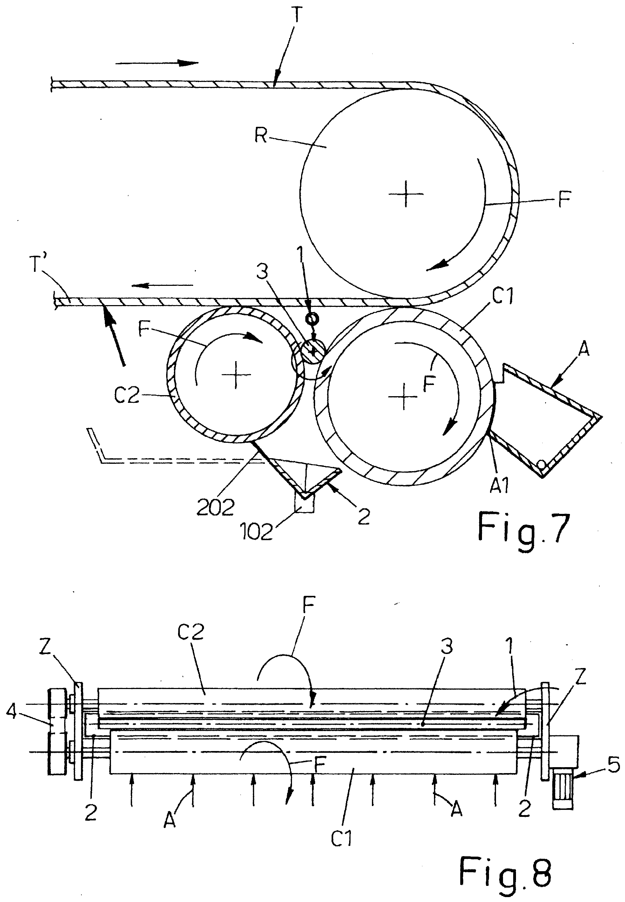

In combination with or without the improvements considered above, with reference to Figure 7, according to which the consecutive cleaning rollers C1 and C2 do not touch each other so as not to rub and cause corresponding wear. These rollers are positioned at a short distance from each other, also at a distance much smaller than that shown in Figure 7, and between them a roller 3 is rested, said roller being "floating" in the sense that it is freely independent and supported by the said rollers C1 and C2 which rotate in the same direction F and at a suitable peripheral speed so that this roller 3 is able to able to rotate about itself as a result of the tangential thrust which is transmitted to it by the rollers C1 and C2 and so that the same middle roller 3 forms a substantial dynamic closure of the space which is situated between the reverse rollers C1 and C2. As shown in Figure 8, the roller C2 has preferably an axial length greater than that of the roller C1 and the floating roller has an axial length the same as or slightly greater than that of the second roller C2 and its ends are suitably spaced from the side walls Z which rotatably support the axes of the rollers C1, C2 which are interconnected by a drive 4 which causes them to rotate at a suitable peripheral speed and in the same direction F, while one of these rollers, for example the roller C1 is actuated by a suitable drive unit 5.

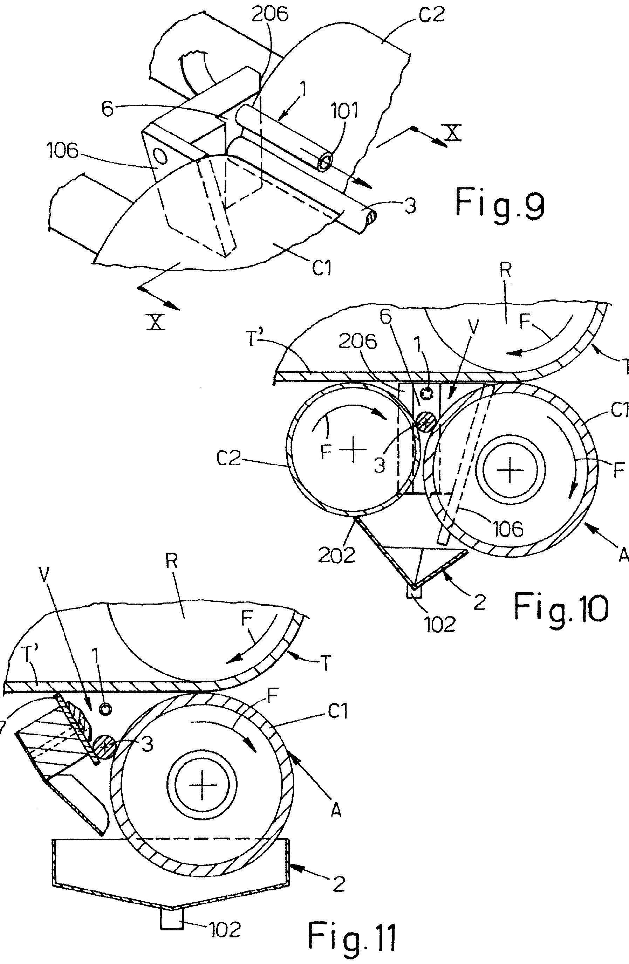

The variant according to Figures 9 and 10, which are not the object of the present invention, teaches that said side walls Z may have, fixed thereto, bodies 6 which are for example made of suitable plastic or other material with a low coefficient of friction and which may co-operate with the ends of the floating roller 3 so as to limit the axial movements thereof and keep it sufficiently centred between the rollers C1, C2. These bodies may if necessary form the transverse part of gutters which have, in plan view, a U-shaped form and which with their flanges 106 and 206 may co-operate with the ends of the reverse rollers C1, C2, so as to channel towards the hopper 2 the liquid flowing out from the ends of the tank V.

In particular in applications involving paints which use as solvent water or other liquids with a low volatility, the said middle roller 3 may not be used, since the liquid which falls between the reverse rollers C1, C2 may be readily collected and recovered by the tank 2 to which the comments made above with reference to Figure 5 are applicable.

Figure 11, which shows the improvement according to the prior solution described in the abovementioned patent EP 1,136,399, whereby the upper solvent-containing tank is formed by a reverse roller C1 and by a doctor blade 7. According to the solution of Figure 11, the tank V may be open at the ends, in region of at least one of which at least one pipe 1 for introducing the solvent is arranged, while the doctor blade 7 may also be in contact with the reverse roller C1, or may be slightly spaced from the latter or may be sufficiently spaced from this roller C1, and a floating roller 3 may be arranged between the two parts as in the solutions considered above. In this case also, bodies 6 for limiting the axial movements of the floating roller 3 and keeping it sufficiently centred between the parts C1 and 7 may also be provided at the ends of the device.

Figures 5 to 11 are not the object of the invention according to the present Divisional Patent Application, which is represented in

Figure 12 which shows laterally and with parts cross-sectioned the cleaning device according to the present Divisional Patent Application.

With reference to Figure 12, T denotes the conveyor belt of the painting machine and R denotes the end drive roller of this conveyor which rotates in the direction of the arrow F. C1 is the reverse roller or cylinder which also rotates in the direction F of the roller R and which co-operates with the portion of the lower section T' of the conveyor belt T supported by the roller R and/or by other following suitable means so that, as a result of the opposite movement in the zone of contact between the belt section T' and the roller C1 along the tangent line A. V denotes a space delimited between the tangent line A, the lower section T' of the conveyor T, the rising portion of the roller C1, the doctor blade 7 and the restrictor blade 107. The cleaning solvent introduced through the conduit means 1 into this space V is discharged into the collecting hopper 2 at a controlled rate through the discharge slit O formed between the restrictor blade 107 and the rising portion of the cylinder 1. Downstream from the tangent line A a second doctor blade 8 is disposed, to scrape the descending surface of the other side of the roller C1 that is removing the paint from the belt T, to collect the paint removed from the roller C1 into a suitable collecting system.

## Claims

1. In a machine for painting, dyeing or impregnating processes a device for cleaning the lower return section (T') of a conveyor belt (T) driven on rollers (R) from fluid substances sprayed onto it, said device being of the type which comprises at least one reverse roller (C1), rotating in a direction (F) opposed to the sliding direction (F') of the lower section (T') of the belt (T), said roller (C1) being in contact along a tangent line (A) with the lower section (T') of the conveyor belt (T) to be cleaned so as to scrape it; **characterized in that** at least one first doctor blade (7) for scraping the lower section (T') of the conveyor belt, said doctor blade being arranged to form between the lower section (T') of the conveyor belt (T) and the reverse roller (C1) a space (V); conduit means (1) for introducing a cleaning solvent into the space (V); means (107) for limiting the immediate discharging of the solvent from the space (V) so that the reverse roller (C1) is wetted by the solvent over its entire axial length, and further comprising at least one hopper (2) for collecting the solvent exiting from the sides of the space (V).

2. A device for cleaning the lower return section (T') according to claim 1, wherein a second doctor blade (8) is disposed downstream from the scraping line (A) in order to scrape the surface of the other side of the roller (C1) that is removing the paint from belt (T), to collect the paint removed from the roller (C1) into another suitable collecting system.
